Europäisches Patentamt

European Patent Office

Office européen des brevets

(19)

(11) **EP 1 187 307 A2**

(12) **EUROPÄISCHE PATENTANMELDUNG**

(43) Veröffentlichungstag:
    **13.03.2002 Patentblatt 2002/11**

(51) Int Cl.⁷: **H02P 9/30**

(21) Anmeldenummer: **01120392.4**

(22) Anmeldetag: **25.08.2001**

(84) Benannte Vertragsstaaten:
    **AT BE CH CY DE DK ES FI FR GB GR IE IT LI LU
    MC NL PT SE TR**
    Benannte Erstreckungsstaaten:
    **AL LT LV MK RO SI**

(30) Priorität: **07.09.2000 DE 10044181**

(71) Anmelder: **ROBERT BOSCH GMBH
    70442 Stuttgart (DE)**

(72) Erfinder:
    • **Pushkolli, Beqir
      71642 Ludwigsburg (DE)**
    • **Mecks, Michael
      32120 Hiddenhausen (DE)**

(54) **Reglerstruktur für elektrische Maschinen**

(57) Die Erfindung bezieht sich auf ein Verfahren und eine Vorrichtung zur Regelung einer Synchron-Drehstrom-Maschine (1) mit einer zugeordneten Umrichterbrücke, bei dem der durch die Erregerwicklung (2) fließende Erregerstrom (4) so gesteuert wird, daß die Ausgangsspannung der Synchron-Drehstrom-Maschine (1) einen Vorgabewert erreicht. Die Ströme der Stränge (8) der Synchron-Drehstrom-Maschine (1) sind in wenigstens zwei Regelbereichen regelbar. Aus dem R-S-T-System (8) transformierte Ist-Eingangsgrößen (10) $i_d$, $i_q$ werden einer Korrektureinrichtung (12) zugeführt, aus deren Ausgangsgrößen Soll-Eingangsgrößen (15) $u_{dSoll}$, $u_{qSoll}$ bestimmt werden.

FIG. 1

EP 1 187 307 A2

**Beschreibung**

Technisches Gebiet

Bei Generatoren, die bei Kraftfahrzeuganwendungen zum Einsatz gelangen, sind die Anforderungen an die Dynamik des Drehmomentes nicht sonderlich hoch. Das Drehmoment darf bei solchen, im Kraftfahrzeug einzusetzenden Generatoren nicht zu rasch anwachsen, da sonst ein leistungsstarker Generator im Extremfall den Verbrennungsmotor des Kraftfahrzeuges abwürgen könnte. Werden Generatoren als Klauenpolgeneratoren konstruiert und eingesetzt, so können sie an einem Pulswechselrichter betrieben werden. Neben der Forderung eines optimalen Wirkungsgrades für alle Betriebspunkte des Generators, stellt sich die Frage nach einer geeigneten Regelung des Generators über den gesamten Drehzahlund Leistungsbereich.

Stand der Technik

Bei heutigen Anwendungsfällen von Klauenpolgeneratoren werden diese weitestgehend mit nachgeschalteter B6-Gleichrichterbrücke betrieben. In diesem Falle bieten elektrische Maschinen wie beispielsweise ein Klauenpolgenerator Vorteile, so u.a. eine kostengünstige Herstellbarkeit und eine robuste Handhabung. Die Vorteile des Klauenpolgeneratorprinzipes sollen möglichst beibehalten werden, wenn zur Leistungssteigerung der verwendeten Klauenpolgeneratoren dieserart von Drehstromgeneratoren mit Puls-Weiten

Modulationsumrichtern betrieben wird. Dadurch lassen sich die Klauenpolgeneratoren auch im elektrisch motorischen Sinne betreiben. Diese eröffnet dieser Generatorbauart interessante Einsatzperspektiven für den Startvorgang eines Kraftfahrzeuges, die Getriebesynchronisation sowie weitere Kfz-spezifische Anwendungsfälle.

Neben einem Generatorbetrieb einer Klauenpolmaschine läßt sich diese auch im Motorbetrieb betreiben, wobei der Umrichter von diesem Wechsel des Betriebsmodus unberührt bleibt. Mittels des Reglers besteht eine Eingriffsmöglichkeit auf die elektrische Maschine, damit läßt sich nicht nur eine Feldschwächung, sondern auch eine Gegendurchflutung im Ständer der elektrischen Maschine in Längsrichtung gesehen realisieren. Ferner kann durch Reduzierung des Erregerstromes des Polrades ein echter Feldschwächebetrieb realisiert werden. Bei der Klauenpolmaschine besteht eine ausgeprägte magnetische Einachsigkeit, die stark vom eingestellten Betriebspunkt abhängig ist und daher die Regelbarkeit einer solchen elektrischen Maschine beeinflussen kann.

Wird ein Drehstromgenerator mit einer Gleichrichterschaltung betrieben, beginnt die Leistungsabgabe erst nach Erreichen einer bestimmten Drehzahl, der Angehdrehzahl. Bei Drehzahlen, die kleiner als die Angehdrehzahl sind, ist die Generatorspannung kleiner als die Batteriespannung. In diesem Falle kann keine elektrische Leistung über die B6-Gleichrichterbrücke ins Bordnetze eines Kraftfahrzeuges eingespeist werden. Eine Variation der Leistungscharakteristik eines Drehstromgenerators kann gemäß DE 197 33 221.8 dadurch herbeigeführt werden, daß dem Drehstromgenerator ein Hochsetz- bzw. Tiefsetzsteller nachgeschaltet wird, so daß sich eine Einflußmöglichkeit auf die Leistungscharakteristik des Generators ergibt. Aus DE 197 33 212.9 ist es bekannt, einen von einer Brennkraftmaschine antreibbaren Generator innerhalb von zwei Regelbereichen zu betreiben, einem Grunddrehzahlbereich bei niedrigen Drehzahlen und einen Feldschwächungsbereich bei höheren Drehzahlen. US 5,648,705 bzw. EP 0 762 596 A1 beschreiben ein Verfahren, bei dem auf die Leistungssteigerung im unteren Drehzahlbereich durch Veränderung des Winkels zwischen Statorstrom und Polradspannung eingegangen wird. Ein ausgearbeitetes Regelkonzept ist nicht dargestellt. Wird im oberen Drehzahlbereich nicht die maximale Ausgangsleistung benötigt, so wird der 3-phasige Strom des Generators mit Hilfe einer passiven Diodenbrücke und alleiniger Regelung des Erregerstromes auf die gewünschte Ausgangsspannung eingestellt. Dadurch kann keine Leistungs- und Wirkungsgrad-optimale Maschinenführung im mittleren und höheren Drehzahlbereich bei Voll- bzw. Teillast erreicht werden.

US 5,663,631 beschreibt eine Generatorregelung bei der der Erregerstrom der elektrischen Maschine durch einen Regler ausschließlich mit Hilfe der Differenz der $\Delta_{UB} = U_{BSoll} - U_{BIST}$ der Ausgangsgleichspannung ermittelt wird. Der Polradwinkel $\Delta$ der elektrischen Maschine wird auf $\Delta = 90°$ gestellt. Die Variation des Polradwinkels in Abhängigkeit vom Erregerstrom bleibt gemäß der vorgeschlagenen Lösung gemäß US-PS 5,663,631 dahingestellt.

Darstellung der Erfindung

Mit der erfindungsgemäß vorgeschlagenen Reglerstruktur läßt sich eine Mehrgrößenregelung einer Drehstrommaschine, die nach dem Klauenpolprinzip aufgebaut ist, realisieren. Es werden die transformierten Ständerströme $i_d$, $i_q$ sowie getrennt davon der Erregerstrom $i_F$ geregelt. Mit Hilfe der integrierten Korrektureinrichtung, die eine Korrekturmatrix widerspiegelt, können separate Komponenten wie ein Entkopplungsnetzwerk sowie getrennte Stromregler für den Querstrom $i_q$ und den Längsstrom $i_d$ entfallen. Die dargestellte Mehrgrößenregelung läßt eine entkoppelte Regelung der auftretenden Ständerstromkomponenten $i_d$ Längsstrom, $i_q$ Querstrom und des Erregerstromes $i_F$ zu.

Durch Summationsstellen lassen sich die Ständerstromregeldifferenzen $\delta id$, $\delta iq$ und die Erregerstromregel-

differenz δiF bilden. Die Regeldifferenzen dienen als Eingangsgrößen für die Reglerübertragungsglieder. Mit den Integrationszeiten, die mit T1, T2 und T3 bezeichnet werden sowie den Proportionalbeiwerten (K1, K2 und K3), kann die Regeldynamik und somit das dynamischen Ansprechverhalten der entkoppelten Ständerstromregelung und Erregerkreisregelung beeinflußt werden. Durch die anschließende Anordnung von Übertragungsgliedern, die als Eingangsgrößen die Reglerausgangsgrößen erhalten, werden die Stellgrößen für die Wechselrichterbrücke und den Erregerkreis korrigiert und somit unabhängig voneinander. Die Regler lassen sich separat auslegen, so daß eine Einzelregelung für die Ständerströme $i_d$, $i_q$ sowie den Erregerstrom $i_F$ erzielt werden kann.

Durch eine Variation der Beschaltung von bereits einmal verarbeiteten Eingangssignalen $i_q$, $i_d$, läßt sich eine Reduzierung der Integrationsanzahl innerhalb der Korrektureinrichtung erzielen, wodurch die Dynamik der Reglerstruktur vorteilhaft beeinflußt werden kann. Eine Reduktion der vorzunehmenden Anzahl von Integrationsstufen an der Reglerstruktur ist auch bei stark schwankenden Maschinenparametern der elektrischen Maschine für die Stromregelung unkritisch.

Bei Implementierung einer Zeitinvariantenkorrektureinrichtung läßt sich die Korrektureinrichtung stationär entkoppelt ausführen, was zu einer erheblichen Vereinfachung der der Verschaltung der Korrektureinrichtung zugrundeliegenden Matrix führt. Auch bei der Zeitinvariant arbeitenden Variante (t → ∞) der Korrekturvorrichtung kann durch Rückführung einzelner, bereits verarbeiteter Eingangssignale eine Detektion der Anzahl der Integrationsstufen erreicht werden, ohne daß die Qualität der Ausgangsgrößen darunter leidet.

Zeichnung

Anhand der Zeichnung wird die Erfindung nachstehend eingehend erläutert.

Es zeigt:

Fig. 1    eine Reglerstruktur zur Regelung einer elektrischen Maschine wie beispielsweise eines Drehstromgenerators,

Fig. 2    die erfindungsgemäß konfigurierte Korrektureinrichtung zur Regelung der Ströme $i_d$, $i_q$ und $i_F$,

Fig. 3    die Korrektureinrichtung gemäß Fig. 2 mit reduzierter Zahl von Integrationsstufen durch Beschaltung von Bauelementen mit Zwischenausgangsgrößen,

Fig. 4    eine Variante der Korrektureinrichtung mit Zeitinvarianz,

Fig. 5    eine Variante einer Antriebsregelung für Klauenpolmaschinen und

Fig. 6    den Strukturplan einer Mehrgrößenregelung.

Ausführungsvarianten

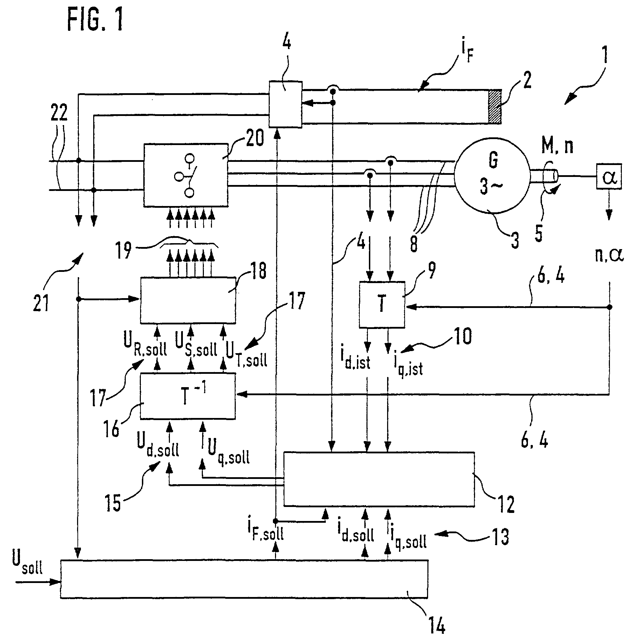

Fig. 1 zeigt die Reglerstruktur zur Regelung einer elektrischen Maschine wie beispielsweise eines Drehstromgenerators.

Die elektrische Maschine 1, eine im Generatorbetrieb betreibbare Drehstrommaschine, wird durch eine Erregerwicklung 2 sowie durch eine Ständerwicklung 3 als wesentliche Baukomponenten charakterisiert. In der Erregerwicklung fließt der Strom $i_F$, auch bezeichnet mit Bezugszeichen 4, welcher an der Zuleitung der Erregerwicklung 2 abgegriffen wird und der Korrekturvorrichtung als Eingangswert übermittelt wird.

Die Ständerwicklung 3 der 3-phasig betreibbaren elektrischen Maschine 1 enthält die Phasenstränge R-S-T, jeweils mit Bezugszeichen 8 bezeichnet, an denen die im R-S-T-System 8 auftretenden Ströme abgegriffen werden. Nach einer Strommessung werden die an den Phasensträngen R-S-T- abgegriffenen Ströme einer Transformationsstufe 9 zur Transformation der R-S-T-Systemgrößen in d, q-Systemgrößen übermittelt.

Der elektrischen Maschine ist ein Lagegeber 7 zugeordnet. Mittels des Lagegebers 7 kann die Winkellage α der Antriebswelle (Polrad) als auch die Drehzahl 5 ermittelt werden. Die durch den Lagegeber 7 detektierten Werte 6 bzw. 11 lassen sich zum einen zunächst an die Transformationsstufe 9 übermitteln sowie ebenfalls an die Rücktransformationsstufe 16 übermitteln. Dadurch ist sichergestellt, daß bei der Transformation wie bei der Rücktransformation der Werte aus dem R-S-T-System 8 in das d, q-System und bei der Rücktransformation der d, q-Systemgrößen in das R-S-T-System eine eindeutige Zuordnung zwischen den Wertepaaren gegeben ist.

Nach erfolgter Transformation der R-S-T-Systemgrößen in der Transformationsstufe 9 in d, q-Systemgrößen für den Strom, d.h. $i_{d,ist}$ bzw. $i_{q,ist}$ werden diese Größen als Eingangsgrößen einem Mehrgrößenregler mit einer Korrektureinrichtung 12 überstellt. Neben den genannten Größen 10 sowie der Erregerstromgröße $i_F$, auch mit Bezugszeichen 4 gekennzeichnet, wird dem Mehrgrößenregler mit Korrektureinrichtung 12 über den Spannungsregler 14 ebenfalls der Sollwert für den Erregerstrom $i_F$ sowie die beiden Sollwerte für den Querstrom $i_d$ bzw. den Längsstrom $i_q$ übermittelt.

Ausgangsgrößen der Korrekturvorrichtung 12 stellen die Wertepaare $u_{dSoll}$ sowie $u_{qSoll}$ des d, q-Systemes dar, welche als Ausgangsgrößen 15 des Mehrgrößenreglers mit Korrektureinrichtung 12 eingangsseitig an einer Rücktransformationsstufe 16 anstehen. Daneben steht an der Rücktransformationsstufe 16 das bereits erwähnte durch den Lagegeber 7 ermittelte Wertepaar 6, 11 für die Drehzahl und die Winkellage der Abtriebswelle der elektrischen Maschine 1 an.

Die Rücktransformationsstufe 16 transformiert die Sollgrößeneingangswerte $u_d$ bzw. $u_q$ des d, q-Systemes in Systemgrößen 17 $u_R$, $u_S$ bzw. $u_T$ des R-S-T-Systemes 8, die dann als Eingangsgrößen für einen pulsweiten Modulationsbaustein 18 die-nen. Dieser liefert einer Gruppe von Ausgangssignalen 19, die an ein Schaltelement 20 übermittelt werden. Am Puls-Weiten-Modulationsbaustein 18 steht neben den R-S-T-Systemgrößen 17 nach deren Rücktransformation aus dem d, q-System auch die Information über die herrschende Spannung im Netz 22 an. Diese wird nach einer Spannungsmesser dem pulsweiten Modulationsbaustein 18 eingangsseitig aufgegeben.

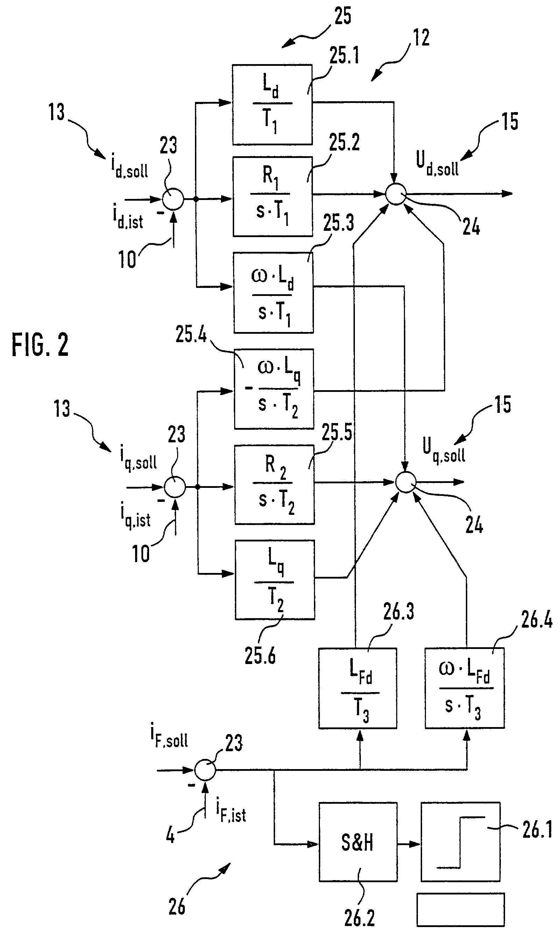

Aus der Darstellung gemäß Fig. 2 geht eine erfindungsgemäß konfigurierte Korrektureinrichtung zur Regelung der Ströme $i_d$, $i_q$ sowie $i_F$ hervor.

Die an den eingangsseitigen Summationspunkten 23 jeweils anstehenden Sollgrößen 13 für die Ströme $i_d$, $i_q$ bzw. $i_F$ werden mit negativen Vorzeichen behafteten Sollwerten 10 bzw. 4 für die Ströme $i_d$, $i_q$ bzw. $i_F$ verknüpft. Danach werden die an den Summationspunkten 23 jeweils gebildeten Differenzwerte gleichzeitig in Gruppen von Regelbausteinen 25.1, 25.2, 25.3 bzw. 25.4, 25.5 und 25.6 sowie 26.2, 26.3 und 26.4 zugeführt. Die Dynamik der erhaltenen Regelung wird maßgeblich durch die Wahl der Zeiten $T_1$ bzw. $T_2$ sowie $T_3$ beeinflußt. Die Vorgabewerte für diese Integrationskonstanten sind anpaßbar, so daß sich die Dynamik durch die Änderung der Integrationszeiten an unterschiedliche Einsatzzwecke einstellen läßt.

Beispielhaft sei die Verarbeitung der Differenzspannung $\Delta i_d$ am Summationspunkt 23 herausgegriffen. Die Spannungsdifferenz gebildet am Summationspunkt 23 wird gleichzeitig den Regelbausteinen 25.1, 25.2 und 25.3 einer Gruppe von Regelbausteinen aufgegeben. Die Ausgangswerte der Regelbausteine 25.1 bzw. 25.2 werden in einem ausgangsseitigen Summationspunkt 24 aufgegeben an dem wiederum das Ausgangssignal des Bausteines 26.3 sowie das Ausgangssignal des Bausteines 25.4 der Gruppe von Bausteinen für die Spannungsdifferenz $\Delta i_q$ bzw. $\Delta i_F$ anliegen. Am Summationspunkt 24 wird dann die Ausgangsgröße der Korrektureinrichtung $u_{dSoll}$, auch mit Bezugszeichen 15 belegt, ermittelt. Diese ausgangsseitige Sollgröße der Korrekturvorrichtung 12 dient als Eingangssollgröße für die Rücktransformationsstufe 16, die aus den Sollgrößenvorgaben des d, q-Systemes Solleingangsgrößen 17 für das R-S-T-System bildet. Analoges gilt für die Verarbeitung der am Summationspunkt 23 gebildeten Differenz $\Delta i_q$ für die Querstromdifferenz in der Ständerwicklung 3 der elektrischen Maschine 1.

Die Korrektureinrichtung 12 enthält darüber hinaus neben der Einzelregelung für die Ständerquer- bzw. Ständerlängsströme einen separaten Summationspunkt 23 zur Bildung der Differenz der Erregerstromsoll- und Istwerte, bezeichnet mit 26.

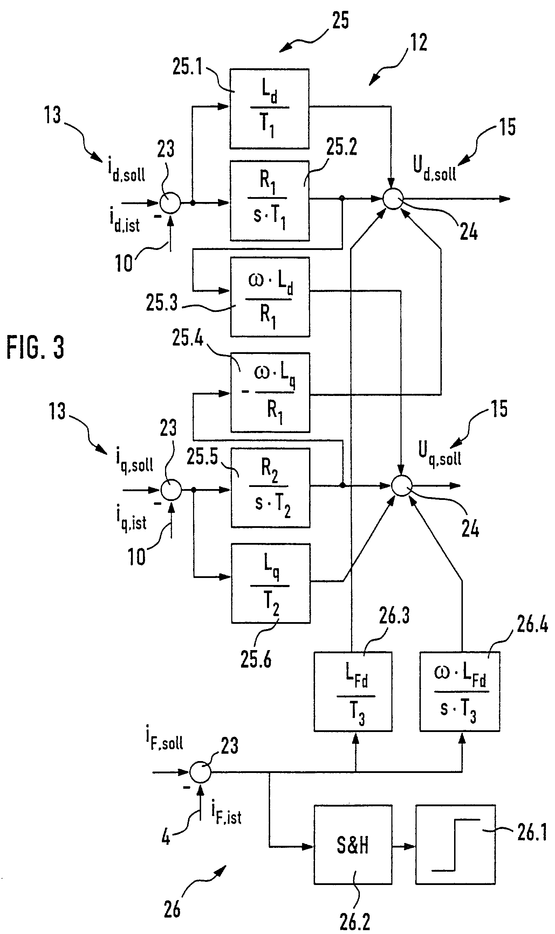

Aus der Darstellung gemäß Fig. 3 geht eine Korrektureinrichtung gemäß Fig. 2 hervor mit einer reduzierten Zahl von Integrationsstufen durch Beschaltung von

Regelbausteinelementen mit Zwischenausgangsgrößen bereits verarbeiteter Eingangsgrößen.

Die Beschaltung der Korrekturvorrichtung 12 gemäß der Darstellung in Fig. 3 unterscheidet sich von der Beschaltung der Korrektureinrichtung 12 gemäß Fig. 2 dadurch, daß die Anzahl der Integrationsstufen signifikant herabgesetzt werden konnte. Dies kann dadurch erreicht werden, daß gemäß der Darstellung in Fig. 3 das Ausgangssignal des Regelbausteines 25.2 der Gruppe von Regelbausteinen 25.1, 25.2, 25.3 als Eingangssignal dem Regelbaustein 25.3 aufgegeben wird, dessen Ausgangssignal auf den ausgangsseitigen Summationspunkt 24 der Gruppe von Regelbausteinen 25.4, 25.5, 25.6 der Gruppe von Regelbausteinen zur Verarbeitung der Spannungsdifferenz $\Delta i_q$ aufgegeben wurde. Umgekehrt verhält es sich mit dem Ausgangssignal des Regelbausteins 25.5 der Gruppe von Regelbausteinen 25.3, 25.4, 25.5 zur Verarbeitung der Spannungsdifferenz der Querströme $\Delta i_q$.

Dessen Ausgangssignal wird dem Regelbaustein 25.4 nach Verarbeitung als Eingangssignal zur Verfügung gestellt, während das Ausgangssignal des Regelbausteines 25.4 dem ausgangsseitigen Summationspunkt 24 zur Ermittlung der Ausgangsgröße $u_d$ aufgegeben wird. Die im unteren Teil der Fig. 3 dargestellte Einzelregelung für den Erregerstrom $i_F$, dessen Spannungsdifferenz aus Soll und Ist-Wert am Summationspunkt 23 gebildet ist, bleibt von der Umleitung der Ein- bzw. Ausgangssignale für die getrennte Stromregelung der Querströme bzw. Längsströme $i_d$ bzw. $i_q$ in der Ständerwicklung 3 der elektrischen Maschine 1 unberührt.

Die mit dem Bezugszeichen 25 bezeichneten Regelbausteine der Regelbausteingruppen 25.1 bis 25.3, bzw. 25.4 bzw. 25.6 bilden das Abbild der nachfolgend dargestellten Matrix:

$$\underline{R} = \begin{bmatrix} \dfrac{R_1}{s \cdot T_1} + \dfrac{L_d}{T_1} & -\dfrac{\omega L_q}{s \cdot T_2} & \dfrac{L_{Fd}}{T_3} \\[3mm] \dfrac{\omega L_d}{s \cdot T_1} & \dfrac{R_2}{s \cdot T_2} + \dfrac{L_q}{T_2} & \dfrac{\omega L_{Fd}}{s \cdot T_3} \\[3mm] \dfrac{2}{3} \cdot \dfrac{L_{Fd}}{T_1} & 0 & \dfrac{R_F}{s \cdot T_3} + \dfrac{L_{Fd}}{T_3} \end{bmatrix}$$

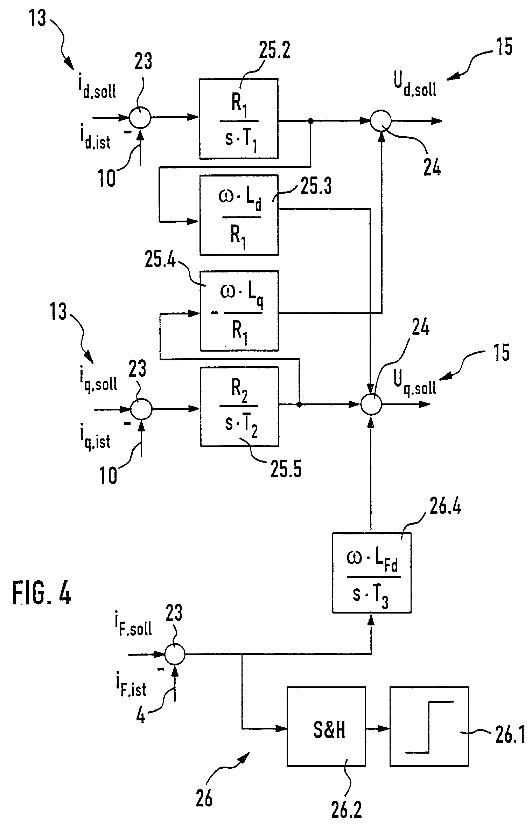

Aus der Darstellung gemäß Fig. 4 geht eine Variante der Korrektureinrichtung 12 mit Zeitinvarianz hervor.

Für Zeitinvariante-Anwendungen für $t \rightarrow \infty$ bzw. $s \rightarrow 0$ läßt sich in der Korrekturvorrichtung 12 gemäß der vorgeschlagenen Erfindung eine stationäre Entkopplung einflechten. Gemäß der Annahme einer stationären Entkopplung vereinfacht sich die Matrix 25 zur nachfolgend wiedergegebenen Matrixform:

$$\underline{R}_{zinv} = \begin{bmatrix} \dfrac{R_1}{s \cdot T_1} & -\dfrac{\omega L_q}{s \cdot T_2} & 0 \\[3mm] \dfrac{\omega L_d}{s \cdot T_1} & \dfrac{R_2}{s \cdot T_2} & \dfrac{\omega L_{Fd}}{s \cdot T_3} \\[3mm] 0 & 0 & \dfrac{R_F}{s \cdot T_3} \end{bmatrix}$$

darstellen. Bei der Auslegung der Korrekturvorrichtung 12 gemäß der Darstellung nach Fig. 4 kann in der Regelung für den Erregerstrom 4, dessen Differenz nach wie vor am Summationspunkt 23 aus der Stromdifferenz zwischen $i_{F,Ist}$ und $i_{F,Soll}$ gebildet wird, der Baustein 26.3 gemäß der Fig. 3 entfallen. Von den in Fig. 3 dargestellten 6 Regelbausteinen der beiden Regelbausteingruppen zur Verarbeitung der Spannungsdifferenz der Querströme bzw. Längsströme der Ständerwicklung 3 verbleiben lediglich 4 Regelbausteine in der Darstellung gemäß Fig. 4. Dies hat seine Ursache darin, daß aus der Matrix gemäß (1) unter Zugrundelegung der Systemrandbedingungen für die $t \rightarrow \infty$ bzw. $s \rightarrow 0$ Terme entfallen. Dadurch vereinfacht sich die der Korrektureinrichtung 12 gemäß Fig. 4 zugrundeliegende Reglerstruktur erheblich. Auch bei dieser Struktur ist beispielsweise das Ausgangssignal des Regelbausteines 25.2 als Eingangssignal dem Regelbaustein 25.3 aufgegeben. Analog dazu wird die am Summationspunkt 23 aus den Eingangssignalen für den Querstrom 13 bzw. 10 gebildete Spannungsdifferenz nach Verarbeitung durch den Regelbaustein 25.5 ausgangssignalseitig als Eingangssignal dem Regelbaustein 25.4 aufgegeben. Die Ausgangssignale der Bausteine 25.3 bzw. 25.4 werden wechselweise an ausgangsseitige Summationspunkte 24 zur Ermittlung der Ausgangsgrößen 15 des d, q-Systems herangezogen.

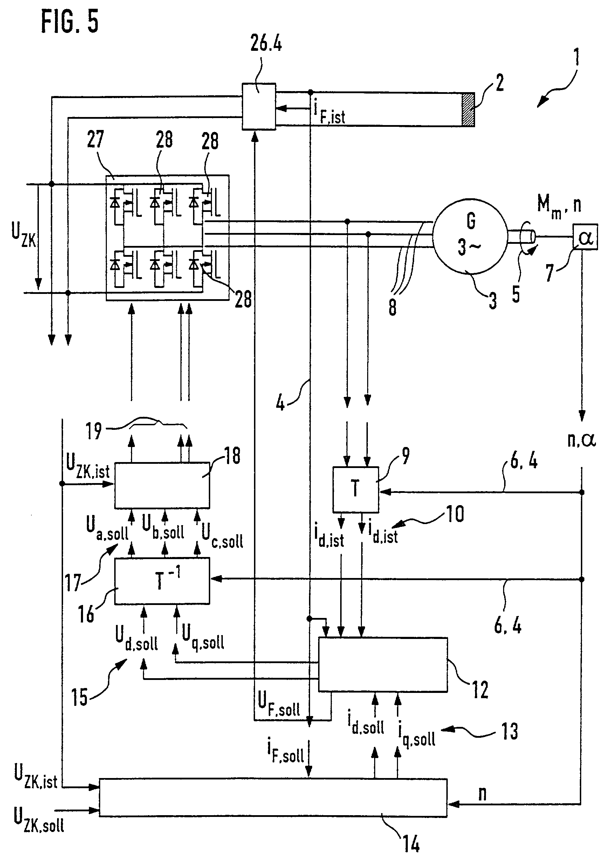

Fig. 5 zeigt die Variante einer Antriebsregelung für Klauenpolmaschinen für Betrieb mit einem Pulswechselrichter (PWR).

Die Darstellung der Antriebsregelung für Klauenpolmaschinen gemäß Fig. 5 entspricht im wesentlichen der in Fig. 1 bereits dargestellten Antriebsregelung für eine elektrische Maschine mit Ständerwicklung 3, bei der die RST-Größen einer Transformation 9 in d, q-System Größen 10 durchlaufen. Auch bei der Konfiguration gemäß Fig. 5 ist ein Mehrgrößenregler mit Korrektureinrichtung 12 vorgesehen, der über einen überlagerten Spannungsregler 14 mit den Sollwerten eingangsseitig beaufschlagt wird. Am überlagerten Spannungsregler 14 selbst geht die Vorgabe der Spannung $U_{soll}$ sowie die am Polradlagergeber 7 abgegriffene Drehzahl n ein. In der Korrektureinrichtung 12 des Mehrgrößenreglers werden aus den Vorgabewerten des überlagerten Spannungsreglers 14 die d, q-Sollgrößen für die Rücktransformationsstufe 16 bestimmt, aus denen nach Durchlaufen der Rücktransformation 16 unter Beachtung der aktuellen Drehzahl 7 und der aktuellen Winkellage 11 der elektrischen Maschine 3 die R-S-T-Systemgrößen errechnet werden. Nach Durchlaufen einer Pulsweitenmodulation 18 werden die aufgrund der Pulsweitenmodulation ermittelten Steuersignale 19 an einen Pulswechselrichter 27 übertragen. Der Pulswechselrichter 27 enthält in drei Zweigen je zwei Leistungstransistoren (Leistungsschalter) 28, über welche die drei Stränge in R-S-T-System der elektrischen Maschine 3 gesteuert werden. Mit 26.4 ist ein Feldregelungsbaustein bezeichnet, der in der Konfiguration gemäß der Fig. 5 im Erregerkreis zur Steuerung des Erregerstromes $i_f$, bezeichnet mit Bezugszeichen 4, vorgesehen ist und der ebenfalls über die Korrektureinrichtung am Mehrgrößenregler 12 gesteuert wird.

Mit einer Antriebsregelung gemäß der Darstellung aus Fig. 5 lassen sich bei Bordnetzen mit oder ohne Batterie große Laständerungen ausregeln. Im Motorbetrieb der Klauenpolmaschine kann ein Verbrennungsmotor gestartet werden, oder ein Klimakompressor einer Wasserpumpe oder ein anderes Aggregat angetrieben werden. Bei der Stromregelung der als elektrische Maschine 3 beispielhaft dargestellten Klauenpolmaschine können hochfrequente stabile Schwingungen der zur Regelung erforderlichen Ströme vermindert werden. Dadurch läßt sich das Betriebsverhalten der Klauenpolmaschine insbesondere mit Einsatz eines Pulswechselrichters 27 in Bordnetzen mit großen und schnellen Laständerungen sowie im Motorbetrieb der Klauenpolmaschine regeln und wesentlich verbessern. Es ist eine gezielte Beeinflussung der Reglerdynamik möglich unter Beibehaltung der vorhandenen Eigenschaften. Damit läßt sich insbesondere das Anlaufverhalten der Klauenpolmaschine 3 im Motorbetrieb wesentlich verbessern.

Der in Fig. 5 dargestellte Mehrgrößenregler mit Korrektureinrichtung 12 umfaßt einen Anteil $\underline{G}_K$ zur Entkop-pelung der Regelgrößen sowie den eigentlichen Regleranteil $\underline{G}_R$ für die entkoppelten Regelgrößen. Der Mehrgrößenregler mit I-Anteil gemäß der erfindungsgemäß vorgeschlagenen Lösung lautet:

$$
G_{R,I} = \begin{bmatrix} \dfrac{1}{s\,T_1} & 0 & 0 \\[2ex] 0 & \dfrac{1}{s\,T_2} & 0 \\[2ex] 0 & 0 & \dfrac{1}{s\,T_3} \end{bmatrix}
$$

Der Mehrgrößenregler mit PI-Anteil gemäß der erfindungsgemäß vorgeschlagenen Lösung lautet:

$$
G_{R,\,PI} = \begin{bmatrix} K_1 + \dfrac{1}{s\,T_1} & 0 & 0 \\[2ex] 0 & K_2 + \dfrac{1}{s\,T_2} & 0 \\[2ex] 0 & 0 & K_3 + \dfrac{1}{s\,T_3} \end{bmatrix}
$$

Zusammen mit dem Entkopplungsanteil ergibt sich:

$$
\underline{U} = \underline{G}_K \cdot \underline{G}_{R,PI} \cdot \underline{\Delta}I
$$

mit dem Mehrgrößenregler:

$$
\underline{R} = \underline{G}_K \cdot \underline{G}_{R,PI}
$$

Damit ergibt sich:

$$
\begin{bmatrix} U_d \\ U_q \\ U_F \end{bmatrix} = \begin{bmatrix} \left(K_1+\dfrac{1}{sT_1}\right)(R_1'+sL_d') & -\left(K_2+\dfrac{1}{sT_2}\right)(\varpi L_q) & \left(K_3+\dfrac{1}{sT_3}\right)(sL_{FD}) \\[2ex] \left(K_1+\dfrac{1}{sT_1}\right)(\varpi L_d) & \left(K_2+\dfrac{1}{sT_2}\right)(R_1+sL_q) & \left(K_3+\dfrac{1}{sT_3}\right)(\varpi L_{FD}) \\[2ex] \left(K_1+\dfrac{1}{sT_1}\right)\left(s\dfrac{3}{2}L_{FD}\right) & 0 & \left(K_3+\dfrac{1}{sT_3}\right)(R_F+sL_F) \end{bmatrix} \begin{bmatrix} i_{d,Soll}-i_{d,ist} \\[1ex] i_{q,Soll}-i_{q,ist} \\[1ex] i_{F,Soll}-i_{F,ist} \end{bmatrix}
$$

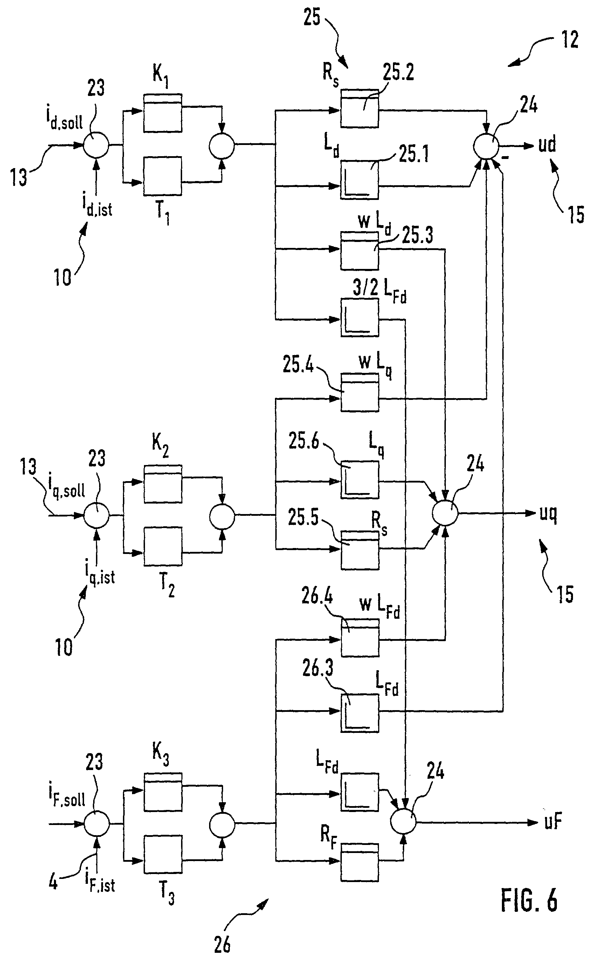

Aus der Fig. 6 geht der Strukturplan der Mehrgrößenregelung gemäß Fig. 5 detaillierter hervor.

Jeder Eingangsgröße 13 ist ein separater Regler zugeordnet, der einen Summationspunkt 23 eingangsseitig enthält, an dem die vorgegebenen d, q-Systemgrößen im Ist-Zustand mit dem vom übergeordneten Spannungsregler 14 vorgegebenen Sollgrößen 13 verknüpft werden. Bei der Konfiguration gemäß Fig. 6 sind in der Entkopplungsmatrix 25 $\underline{G}_K$ dynamische Übertragung der Differenzierer vorgesehen. Für eine Klauenpolmaschine 3 ist es möglich, eine statische Entkopplung vorzunehmen, bei der innerhalb der zeitinvariante Entkopplungsmatrix gemäß Gleichung 6 s → 0 geht.

Die zeitinvariante Entkopplungsmatrix ist nachfolgend wiedergegeben:

$$
\begin{bmatrix} u_d \\ u_q \\ u_F \end{bmatrix} = \begin{bmatrix} \left(K_1+\dfrac{1}{sT_1}\right)R_1 & -\left(K_2+\dfrac{1}{sT_2}\right)(\varpi L_q) & 0 \\[2ex] \left(K_1+\dfrac{1}{sT_1}\right)(\varpi L_d) & \left(K_2+\dfrac{1}{sT_2}\right)R_1 & \left(K_3+\dfrac{1}{sT_3}\right)(\varpi L_{FD}) \\[2ex] 0 & 0 & \left(K_3+\dfrac{1}{sT_3}\right)R_F \end{bmatrix} \begin{bmatrix} i_{d,soll}-i_{d,ist} \\[1ex] i_{q,soll}-i_{q,ist} \\[1ex] i_{F,soll}-i_{F,ist} \end{bmatrix}
$$

Bezugszeichenliste

| | |
|---|---|
| 1 | elektrische Maschine |
| 2 | Erregerwicklung |
| 3 | Ständerwicklung |
| 4 | Erregerstrom iF |
| 5 | Abgabemoment |
| 6 | Drehzahl |
| 7 | Lagegeber |
| 8 | Phasenstränge R-S-T-System |
| 9 | Transformation d, q-Systemgrößen |
| 10 | d, q-Systemgrößen Strom |
| 11 | Winkellage |
| 12 | Mehrgrößenregler mit Korrektureinrichtung |
| 13 | Eingangsgrößen des Mehrgrößenreglers |
| 14 | Spannungsregler |
| 15 | d, q-Sollgrößen Rücktransformation |
| 16 | Rücktransformation |
| 17 | R-S-T-Systemgrößen |
| 18 | PWM-Baustein |
| 19 | Steuersignale |
| 20 | Schaltelement |
| 21 | Spannungsmesser |

| 22 | Netzgrößen |
| 23 | Summationspunkt eingangsseitig |
| 24 | Summationspunkt ausgangsseitig |
| 25 | Korrekturmatrix |
| 25.1 | } |
| 25.2 | } $i_d$-Regelung |
| 25.3 | } |
| 25.4 | } |
| 25.5 | } $i_q$-Regelung |
| 25.6 | } |
| 26 | Erregerstromregelung |
| 26.1 | Vergleicher |
| 26.2 | Summationsbaustein |
| 26.3 | Feldregelung Induktivität |
| 26.4 | Feldregelungsbaustein |
| 27 | Pulswechselrichter |
| 28 | Leistungsschalter |

**Patentansprüche**

1. Verfahren zur Regelung einer Synchron-Drehstrom-Maschine (1) mit einer zugeordneten Umrichterbrücke, bei dem der durch die Erregerwicklung (2) fließende Erregerstrom (4) so geregelt wird, daß die Ausgangsspannung der Synchron-Drehstrom-Maschine (1) einen Vorgabewert erreicht und die Ströme der Stränge (8) der Synchron-Drehstrom-Maschine (1) in wenigstens zwei Regelbereichen regelbar sind, **dadurch gekennzeichnet, daß** aus dem R-S-T-System (8) transformierte Ist-Eingangsgrößen (10) $i_d$, $i_q$ einer Korrekturvorrichtung (12) zugeführt werden, aus deren Ausgangsgrößen Soll-Eingangsgrößen (15) $u_{dSoll}$ und $u_{qSoll}$ bestimmt werden.

2. Verfahren gemäß Anspruch 1, **dadurch gekennzeichnet, daß** Solleingangsgrößen $i_{qSoll}$, $i_{dSoll}$, $i_{F,Soll}$ einem Mehrgrößenregler mit Korrekturvorrichtung (12) über einen übergeordneten Spannungsregler (14) zugeführt werden.

3. Verfahren gemäß Anspruch 1, **dadurch gekennzeichnet, daß** eine Transformationsstufe (9) zur Transformation der R-S-T-Ist-Größen Drehzahl- und Winkellage (6, 11) der elektrischen Maschine (1) zuführbar sind.

4. Verfahren gemäß Anspruch 1, **dadurch gekennzeichnet, daß** einer Rücktransformationsstufe (16) Sollgrößen $u_d$, $u_q$ des Mehrgrößenreglers mit Korrektureinrichtung (12) sowie Drehzahl- und Winkellage-Signale (6, 11) der elektrischen Maschine (1) zuführbar sind.

5. Verfahren gemäß Anspruch 1, **dadurch gekennzeichnet, daß** die Ist-Eingangsgrößen (10) $i_q$, $i_d$ und $i_F$ und die Sollgrößen (13) $i_{F,Soll}$, $i_{d,Soll}$, $i_{q,Soll}$ Summationspunkten (23) zugeführt werden, an denen Differenzen ermittelbar sind.

6. Verfahren gemäß Anspruch 5, **dadurch gekennzeichnet, daß** die Größen $i_{d,Soll}$, $i_{d,Ist}$ einer Gruppe von $i_d$-Regelbausteinen (25.1, 25.2, 25.3), die Größen $i_{qSoll}$, $i_{qIst}$ einer Gruppe von $i_q$-Regelbausteine (25.4, 25.5, 25.6) und die Größen $i_{F,Soll}$, $i_{FIst}$ einer Gruppe von Regelkomponenten (26.2, 26.3 und 26.4) zugeführt werden.

7. Verfahren gemäß Anspruch 5, **dadurch gekennzeichnet, daß** innerhalb der Korrektureinrichtung (12) Ausgangswerte einzelner Bausteine (25.2, 25.5) jeweils Bausteinen (25.3, 25.4) der selben Gruppe von $i_q$-Regelbausteinen (25.1, 25.2 und 25.3) bzw. von $i_d$-Regelbausteinen (25.4, 25.5 und 25.6) zugeführt werden.

8. Verfahren nach Anspruch 7, **dadurch gekennzeichnet, daß** die Ausgangswerte der Regelbausteine (25.3, 25.4) von der $i_q$-Regelbausteine bzw. $i_d$-Regelbausteine Summationspunkten (24) der jeweils anderen Gruppe von $i_q$-Regelbausteinen (25.1, 25.2, 25.3) bzw. der Gruppe von $i_q$-Regelbausteine (25.4, 25.5, 25.6) an deren ausgangsseitigen Summationspunkten (24) zuführbar sind.

9. Verfahren nach Anspruch 5, **dadurch gekennzeichnet, daß** die Dynamik der Regelgrößen mit dem Mehrgrößenregler mit Korrektureinrichtung (12) durch Verwendung von I-Anteil oder/und PI-Anteil angepaßt werden kann.

**10.** Vorrichtung zur Regelung eines Drehstromgenerators (1) mit einer diesem zugeordneten Umrichterbrücke, bei der der durch die Erregerwicklung (2) fließende Erregerstrom (4) so geregelt wird, daß die Ausgangsspannung des Drehstromgenerators (1) einen Vorgabewert erreicht und die Ströme der Stränge (8) des Drehstromgenerators (1) in wenigstens zwei Regelbereichen regelbar sind, **dadurch gekennzeichnet, daß** die Korrektureinrichtung (12) transformierte Ist-Eingangsgrößen (10) $i_d$, $i_q$ sowie die Eingangsgröße $i_F$ unter Berücksichtigung der Soll-Ausgangsgrößen (13) eines Spannungsreglers (14) vor Rücktransformation (16) in das R-S-T-System (8) der elektrischen Maschine (1) korrigiert.

FIG. 1

FIG. 2

$$\frac{L_d}{T_1}$$ 25.1

$$\frac{R_1}{s \cdot T_1}$$ 25.2

$$\frac{\omega \cdot L_d}{s \cdot T_1}$$ 25.3

$$-\frac{\omega \cdot L_q}{s \cdot T_2}$$ 25.4

$$\frac{R_2}{s \cdot T_2}$$ 25.5

$$\frac{L_q}{T_2}$$ 25.6

$$\frac{L_{Fd}}{T_3}$$ 26.3

$$\frac{\omega \cdot L_{Fd}}{s \cdot T_3}$$ 26.4

$i_{d,soll}$

$i_{d,ist}$

$i_{q,soll}$

$i_{q,ist}$

$i_{F,soll}$

$i_{F,ist}$

$U_{d,soll}$

$U_{q,soll}$

S&H

25

12

15

15

13

23

10

24

26

26.1

26.2

4

FIG. 3

$$\frac{L_d}{T_1}$$  25.1   25

$$\frac{R_1}{s \cdot T_1}$$  25.2

13

$i_{d,soll}$   23

$i_{d,ist}$   −

10

12

15

$U_{d,soll}$

24

$$\frac{\omega \cdot L_d}{R_1}$$  25.3

25.4  $$\frac{-\omega \cdot L_q}{R_1}$$

13

$i_{q,soll}$   23   25.5  $$\frac{R_2}{s \cdot T_2}$$

$i_{q,ist}$   −

10

15

$U_{q,soll}$

24

$$\frac{L_q}{T_2}$$

25.6

26.3  $$\frac{L_{Fd}}{T_3}$$

26.4  $$\frac{\omega \cdot L_{Fd}}{s \cdot T_3}$$

$i_{F,soll}$   23

−   $i_{F,ist}$

4

S&H   26.1

26   26.2

FIG. 4

# FIG. 5

EP 1 187 307 A2

FIG. 6

15